# EUROPÄISCHE PATENTSCHRIFT

(11) **EP 0 804 093 B1**
(45) Veröffentlichungstag und Bekanntmachung des Hinweises auf die Patenterteilung: **10.02.1999**
(21) Anmeldenummer: 95932733.9
(22) Anmeldetag: 13.09.1995
(51) Int. Cl.: A23L 2/44, A23L 3/3463, A23F 3/14

(54) **KONSERVIERUNGSMITTEL**
PRESERVATIVE
AGENT DE CONSERVATION

(30) Priorität: 26.09.1994 DE 4434314
(43) Veröffentlichungstag der Anmeldung: 05.11.1997
(73) Patentinhaber: BAYER AG, 51368 Leverkusen (DE)
(72) Erfinder: EXNER, Otto, D-40876 Ratingen (DE); KUGLER, Martin, D-42799 Leichlingen (DE); HOFFMANN, Manfred, D-47918 Tönisvorst (DE)
(86) Internationale Anmeldenummer: EP9503599
(87) Internationale Veröffentlichungsnummer: WO9609774

(56) Entgegenhaltungen:
- AU-B- 604 217
- BE-A- 731 582
- CH-A- 355 019
- DE-B- 1 140 802
- US-A- 3 936 269
- US-A- 3 979 524
- US-A- 5 021 251
- FOOD TECHNOLOGY, Bd. 20, Nr. 10, Oktober 1966 CHICAGO US, Seiten 120-122, W.O.HARRINGTON ET AL. 'Preservative effects of diethyl pyrocarbonate and its combination with potassium sorbate on apple cider'

## Beschreibung

Die Anmeldung betrifft eine Kombination Dimethyldicarbonat/Kaliumsorbat/Ascorbinsäure zur Entkeimung von nichtcarbonisierten und carbonisierten Getränken.

Erfrischungsgetränke auf Fruchtsaftbasis, Fertigtee-Getränke, viele andere Erfrischungsgetränke eigener Art, Weincooler, aber auch entalkoholisierte Weine und sonstige Weine müssen in der Regel vor Befall/Verderb durch Schimmel, Hefen und Bakterien geschützt werden. Es sind viele Methoden bekannt, wie z.B. aseptische Füllung, Heißabfüllung, Tunnelpasteurisierung, Anwendung persistenter Konservierungsmittel. Auch die als Kaltentkeimung bekannte Anwendung von Dimethyldicarbonat (z.B. Velcorin®) hat für viele schwierig zu konservierende Produkte eine immer größere Bedeutung gewonnen. Allerdings wird der Fachmann auch heute mit besonders schwierigen Problemfällem konfrontiert. Insbesondere bei den nicht-carbonisierten, stillen Erfrischungsgetränken, Getränken auf Fruchtsaft- und/oder Tee-Basis können auch bei Verwendung von bekannten Konservierungsmethoden Probleme auftreten, wie Resistenzerscheinungen beim Einsatz von Salzen der Sorbin- und Benzoesäure, Fehlgeschmack bei Überdosierung durch nationale Gesetzgebung eingeschränkte Verwendung, wobei dabei die max. zugelassene Dosierung nicht immer ausreichend ist.

Auch hat die vermehrte Verwendung von Mehrweggebinden aus Kunststoff, insbesondere die PET-Flasche, die ja bekannterweise für die Konservierung mittels Pasteurisierung in der Regel nicht verwendet werden kann, den Bedarf an effizienten Konservierungsmethoden ohne Hitzebehandlung drastisch erhöht. Auch ist bekannt, daß durch die Verwendung mancher Süßstoffkombination aus Geschmacks- und Stabilitätsgründen der pH-Wert der Erfrischungsgetränke deutlich auf ca. 4 erhöht wurde. Bei diesem relativ hohen pH-Wert muß die Konzentration der organischen Säuren, die als Konservierungsmittel in Form der Salze Verwendung finden - Sorbinsäure, Benzoesäure bzw. Kalium- oder Natriumsorbat und Natriumbenzoat - ebenfalls erhöht werden, da die antimikrobielle Wirkung dieser Säuren stark pH-abhängig ist und nur die undissozierte Form wirksam ist.

Bekannt ist ferner, daß die Wasserhärte, die antimikrobielle Wirksamkeit z.B. von Kaliumsorbat erheblich beeinflußt. Hierbei kommt es aufgrund des erhöhten CaCO₃/MgCO₃-Gehaltes zur Bildung von z.B. Calciumsorbat, was leicht ausflockt und dann nicht mehr zur Konservierung des Getränkes beiträgt. Um diesen Effekt zu kompensieren, müssen in der Regel deutlich höhere Kaliumsorbat-Konzentrationen zur Konservierung der Getränke eingesetzt werden, was zu einer Verschlechterung des Getränkegeschmackes führt bzw. entsprechend der jeweiligen nationalen Gesetzgebung unter Umständen nicht in diesen Konzentrationen gestattet ist. Für diese Fälle müssen in der Praxis hohe Investitionen zur Verminderung der Carbonathärte getätigt werden.

Es wurde nun überraschenderweise gefunden, daß durch eine kombinierte Anwendung von Ascorbinsäure, K-Sorbat und/oder Na-Benzoat, und Dimethyldicarbonat (DMDC) auch bei hoher Wasserhärte (ausgedrückt als CaCO₃-Gehalt) eine hervorragende Konservierung von Getränken erzielt wird.

So sind z.B. 175 bzw. 230 ppm DMDC in Kombination mit 300 ppm K-Sorbat und 240 ppm Ascorbinsäure in der Lage, Getränke bei hoher Wasserhärte (entspr. 300 ppm CaCO₃) wirkungsvoll zu konservieren.

Unter Getränken werden dabei vorzugsweise Erfrischungsgetränke wie nicht-alkoholisierte, aromatisierte Erfrischungsgetränke verstanden wie Limonaden, fruchtsafthaltige Erfrischungsgetränke, Tee (sogenannte ready-to-drink Teegetränke) Mischgetränke eines Tee/fruchtsafthaltigen Erfrischungsgetränkes, aber auch entsprechende Konzentrate sowie Weincooler und entalkoholisierte Weine.

Auch Weine im Sinne diverser nationaler Gesetzgebungen können, soweit die Gesetzgebung das erlaubt, mit der erfindungsgemäßem Kombination bei stark reduziertem SO₂-Gehalt zuverlässig konserviert werden. Vorrangig wird die erfndungsgemäße Kombination in stillen Getränken der oben genannten Auflistung Verwendung finden, aber auch leicht-carbonisierte Getränke sowie auch carbonisierte Getränke können vorteilhaft mit dieser erfindungsgemäßen Kombination entkeimt werden. Bevorzugt wird die erfindungsgemäße Kombination in sogenannten stillen, d.h. nichtcarbonisierten Tee- und Tee/Mischgetränken verwendet.

Bevorzugt im Sinne der Erfindung ist die gemeinsame Verwendung von 50 bis 250 ppm Dimethyldicarbonat, insgesamt 200 bis 500 ppm K-Sorbat und/oder Na-Benzoat und 100 bis 500 ppm Ascorbinsäure für die Konservierung von oben genannten Getränken, wobei der Härtegrad des verwendeten Wassers die Konservierungsgüte nicht beeinträchtigt.

Besonders bevorzugt im Sinne dieser Erfindung wird der Einsatz von 150 bis 250 ppm Dimethyldicarbonat, 250 bis 350 ppm K-Sorbat und 150 bis 400 ppm Ascorbinsäure, insbesondere für die Konservierung von Getränken mit besonders hoher Wasserhärte.

Die Herstellung der Getränke erfolgt nach üblichen Verfahren, wobei vorzugsweise die einzelnen Getränke-Bestandteile mit K-Sorbat und/oder Na-Benzoat und Ascorbinsäure vermischt werden und anschließend mittels einer geeigneten Dosiervorrichtung, insbesondere Dosieranlagen wie LEWA DA9 oder entsprechender Burdomat-Typen, mit Dimethyldicarbonat versetzt werden.

### Beispiel

1. Eine nicht-carbonisiertes Tee-Wasser-Mischung (Tee-Getränk) mit einer Wasserhärte von 300 ppm CaCO₃-Gehalt wird mit 175 ppm Velcorin®, 300 ppm K-Sorbat und 240 ppm Ascorbinsäure versetzt. Das erhaltene Getränk ist ausreichend und dauerhaft konserviert.
2. Entsprechend Beispiel 1 wird 230 ppm Velcorin® zugegeben. Auch hierbei erhält man ein ausreichend und dauerhaft konserviertes Tee-Getränk.

## Patentansprüche

1. Verfahren zur Entkeimung und Konservierung von Getränken, dadurch gekennzeichnet, daß K-Sorbat und/oder Na-Benzoat und Ascorbinsäure und Dimethyldicarbonat in die zu konservierenden Getränke eingearbeitet werden.

2. Verfahren gemäß Anspruch 1, dadurch gekennzeichnet, daß 50 bis 250 ppm Dimethyldicarbonat, insgesamt 200 bis 500 ppm K-Sorbat und/oder Na-Benzoat und 100 bis 500 ppm Ascorbinsäure eingearbeitet werden.

3. Verfahren gemäß Anspruch 1, dadurch gekennzeichnet, daß 150 bis 250 ppm Dimethyldicarbonat, 250 bis 350 ppm K-Sorbat und 150 bis 400 ppm Ascorbinsäure eingearbeitet werden.

4. Verfahren gemäß Anspruch 1, dadurch gekennzeichnet, daß Getränke mit hoher Wasserhärte entkeimt und konserviert werden.

5. Verfahren gemäß Anspruch 1, dadurch gekennzeichnet, daß als Getränke stille, nicht-carbonisierte Erfrischungsgetränke entkeimt und konserviert werden.

6. Verfahren gemäß Anspruch 1, dadurch gekennzeichnet, daß als Getränke Tee und Tee/Fruchtsaft-Mischungen entkeimt und konserviert werden.

7. Die nach dem Verfahren nach Anspruch 1 hergestellten Getränke.

8. Verwendung von Kalium-Sorbat und/oder Na-Benzoat und Dimethyldicarbonat und Ascorbinsäure zur Entkeimung und Konservierung von Getränken.

9. Konservierungsmittel zum Entkeimen von Getränken, enthaltend Kalium-Sorbat und/oder Na-Benzoat und Ascorbinsäure und Dimethyldicarbonat.

## Claims

1. Process for sterilizing and preserving drinks, characterized in that K-sorbate and/or Na-benzoate and ascorbic acid and dimethyl dicarbonate are incorporated into the drinks to be preserved.

2. Process according to Claim 1, characterized in that 50 to 250 ppm of dimethyl dicarbonate, in total 200 to 500 ppm of K-sorbate and/or Na-benzoate and 100 to 500 ppm of ascorbic acid are incorporated.

3. Process according to Claim 1, characterized in that 150 to 250 ppm of dimethyl dicarbonate, 250 to 350 ppm of K-sorbate and 150 to 400 ppm of ascorbic acid are incorporated.

4. Process according to Claim 1, characterized in that drinks having a high water hardness are sterilized and preserved.

5. Process according to Claim 1, characterized in that the drinks sterilized and preserved are still non-carbonated soft drinks.

6. Process according to Claim 1, characterized in that the drinks sterilized and preserved are tea and tea/fruit juice mixtures.

7. The drinks produced by the process according to Claim 1.

8. Use of potassium sorbate and/or Na-benzoate and dimethyl dicarbonate and ascorbic acid for sterilizing and preserving drinks.

9. Preservative for sterilizing drinks, containing potassium sorbate and/or Na-benzoate and ascorbic acid and dimethyl dicarbonate.

## Revendications

1. Procédé de désinfection et de conservation de boissons, caractérisé en ce que l'on incorpore du sorbate de K et/ou du benzoate de Na et de l'acide ascorbique et du bicarbonate de diméthyle à la boisson à conserver.

2. Procédé suivant la revendication 1, caractérisé en ce que l'on incorpore 50 à 250 ppm de bicarbonate de diméthyle, au total 200 à 500 ppm de sorbate de K et/ou de benzoate de Na et 100 à 500 ppm d'acide ascorbique.

3. Procédé suivant la revendication 1, caractérisé en ce que l'on incorpore 150 à 250 ppm de bicarbonate de diméthyle, 250 à 350 ppm de sorbate de K et 150 à 400 ppm d'acide ascorbique.

4. Procédé suivant la revendication 1, caractérisé en ce que l'on désinfecte et conserve des boissons à dureté élevée de l'eau.

5. Procédé suivant la revendication 1, caractérisé en ce que l'on désinfecte et conserve des boissons de type boissons rafraîchissantes plates, non gazeuses.

6. Procédé suivant la revendication 1, caractérisé en ce que l'on désinfecte et conserve des boissons de type thé et mélanges thé/jus de fruits.

7. Boissons préparées par le procédé suivant la revendication 1.

8. Utilisation de sorbate de potassium et/ou de benzoate de Na, de bicarbonate de diméthyle et d'acide ascorbique pour la désinfection et la conservation de boissons.

9. Agent de conservation pour la désinfection de boissons, contenant du sorbate de potassium et/ou du benzoate de Na, de l'acide ascorbique et du bicarbonate de diméthyle.
